# EUROPEAN PATENT APPLICATION

(11) **EP 3 641 404 A1**
(43) Date of publication of application: **22.04.2020**
(21) Application number: 18201187.4
(22) Date of filing: 18.10.2018
(51) Int. Cl.: H04W 48/12, H04W 16/04, H04W 16/14, H04W 72/04, H04W 72/12, H04W 88/06, H04W 88/10

(54) **METHOD FOR OPERATING LTE AND 5G COMMUNICATION SYSTEMS IN AN OVERLAPPING RADIO COVERAGE AREA**

(71) Applicant: KONTRON TRANSPORTATION FRANCE SAS, 78066 St Quentin Yvelines Cedex (FR)
(72) Inventor: GRUET, Christophe, 78180 Montigny le Bretonneux (FR); TANE, Pierre, 91200 Boulogne-Billancourt (FR); JACQUES, Roger, 78320 Lévis Saint Nom (FR)
(74) Representative: Weiser & Voith Patentanwälte Partnerschaft

(57) **Abstract**

A method for operating a first LTE communication system (1) and a second 5G communication system (2) in a same radio coverage area (3) for communication (14, 15) between a user terminal (4', 4''') and an eNB base station (5) of the first communication system and between the same or another user terminal (4', 4''') and a gNB base station (6) of the second communication system (2), wherein each of the eNB and gNB base stations (5, 6) communicates downlink data over a sequence of downlink radio frames and uplink data over a sequence of uplink radio frames, the downlink as well as the uplink radio frames (Fⱼ, Hₖ) each comprising a predetermined number of subframes (SFᵢ), comprises synchronizing the eNB and gNB base stations (5, 6) on a subframe level and using, at least for their downlink radio frames (Fⱼ, Hₖ), overlapping frequency bands for the eNB base station (5) and the gNB base station (6), wherein, at least for the downlink radio frames (Fⱼ, Hₖ), the eNB base station (5) uses a first set of subframes (SFᵢ) for communication (14) and the gNB base station (6) uses a second set of subframes (SFᵢ) for communication (16), which first and second sets of subframes (SFᵢ) do not overlap during communication (14, 15).

## Description

The present invention relates to a method for operating a first communication system according to an LTE standard and a second communication system according to a 5G standard in a same radio coverage area.

Traditional approaches when introducing a new wireless network technology such as 3GPP ("5G") alongside legacy wireless network technology such as LTE ("4G") involve deploying the new technology in a separate frequency band. However, some wireless network operators have either only a limited frequency band available or have user terminals which cannot support an additional frequency band for the new 5G technology. On the other hand, a complete replacement ("overnight switching") of LTE by 5G may not be feasible due to the slow transition of user terminals from LTE to 5G, so that a co-existence of both technologies may be required for an extended period of time.

There is thus a need for operating LTE and 5G communication systems in an overlapping radio coverage area with minimum bandwidth requirements.

To solve this problem, the invention provides for a method for operating a first communication system according to an LTE standard and a second communication system according to a 5G standard in a same radio coverage area,
to be used for communication between a user terminal and an eNB base station of the first communication system and between the same or another user terminal and a gNB base station of the second communication system,
wherein each of the eNB and gNB base stations communicates downlink data over a sequence of downlink radio frames and uplink data over a sequence of uplink radio frames, the downlink as well as the uplink radio frames each comprising a predetermined number of subframes,
which method is characterized by synchronizing the eNB and gNB base stations on a subframe level and using, at least for their downlink radio frames, overlapping frequency bands for the eNB base station and the gNB base station,
wherein, at least for the downlink radio frames, the eNB base station uses a first set of subframes for communication and the gNB base station uses a second set of subframes for communication, which first and second sets of subframes do not overlap during communication.

With the method of the invention an LTE communication system and a 5G communication system can co-exist within the same frequency range, i.e. with same or overlapping frequency bands, without interference, as the resource grids in the frequency/time-plane are synchronized in subframe timings so that subframe usage can be split among the two systems. When the subframes coincide in starting times, unused subframes of the LTE system can be re-used as subframes by the 5G system. Legacy LTE user terminals and novel 5G user terminals can be serviced in the same geographical area within one and the same bandwidth a network operator has available.

In a preferred embodiment which is particularly suited for current configurations of LTE systems, where each frame has a set of ten subframes, the eNB base station uses at least the 1st, 5th, 6th and 10th subframe in its downlink radio frames, and the gNB base station uses at least one of the remaining 2nd, 3rd, 4th, 7th, 8th and 9th eNB base station subframes in its downlink radio frames. The 1st, 5th, 6th and 10th subframe of the LTE resource grid usually contain indispensable LTE signalling channels such as PBCH, SIB-1, PSS/SSS, and PCH data. However, from the remaining subframes any or all can be allocated by the 5G system so that up to 60% of the available LTE resource grid can be used by the 5G system.

According to a further preferred feature of the invention, the eNB and gNB base stations are synchronized such that the 1st subframes of the downlink radio frames of the gNB base station coincide with the 2nd, 3rd, 4th, 7th, 8th or 9th subframes of the downlink radio frames of the eNB base station. This is particularly suited for current 5G communication systems in which many of the subframes can be used flexibly either for traffic channels or signalling with the exception of the 1st subframe which is required for 5G signalling data such as PBCH, SIB-1, PSS/SSS, and PCH data. Offsetting the grids of the LTE and 5G communication system with respect to each other ensures that the 5G system can allocate a subframe which corresponds to its 1st subframe, for common signalling purposes in the 5G system. Preferably, the eNB and gNB base stations are synchronized such that the 1st subframes of the downlink radio frames of the gNB base station coincide with the 2nd subframes of the downlink radio frames of the eNB base station, so that delay between the two communication systems is minimized.

An additional synergistic effect of the inventive co-locating of the LTE and 5G systems within the same frequency range can be achieved in that the eNB and gNB base stations use overlapping frequency bands for their uplink radio frames, and in that the eNB and gNB base stations share coinciding subframes of their uplink radio frames for random-access transmissions received from user terminals. In particular, the RACH area of the uplink frames can be shared among the two systems in this way.

In one embodiment, the number of subframes of the first and second sets of subframes that are allocated to the LTE system on the one hand and the 5G system on the other hand can be preconfigured as a system parameter and stored in the eNB and gNB base stations that operate in overlapping radio coverage areas. In another embodiment, the sizes of those first and second sets are dynamically negotiated between the eNB and gNB base stations in response to a current or estimated data traffic volume over the eNB base station and the gNB base station, respectively. The resource allocation of the subframes can thus be dynamically adjusted according to traffic needs in the overlapping radio coverage areas.

In a further preferred embodiment of the invention the subframe/s used by the gNB base station is/are indicated in a SysInfo broadcast by the eNB base station. This prevents LTE user terminals from looking for reference signals in subframes which are allocated to the 5G communication system, to avoid unnecessary processing in the user terminals. Preferably, said subframe/s is/are identified in the SysInfo as MBSFN subframes, so that they will be considered as reserved for MBMS (multimedia broadcast and multicast services) and not used for traffic and signalling transmissions in the LTE system.

The synchronisation of the LTE and 5G communication systems can be achieved in any known ways, e.g., by providing a direct or indirect connection between the eNB and gNB base stations so that the clock of one base station can be slaved to the clock of the other base station. In a preferred embodiment a common clock signal is fed to the eNB and gNB base stations for synchronizing, in particular via a precision time protocol such as, e.g., the IEEE 1588 standard. Preferably, the common clock signal is derived from a Global Navigation Satellite System (GNSS) clock so that the eNB and gNB base stations are synchronised to a common absolute reference clock with GNSS accuracy.

A further synergistic effect of sharing overlapping resource grids by the LTE and the 5G system can be achieved in that the subframes of downlink radio frames are split in frequency and time into resource blocks and the gNB base station uses at least one of those resource blocks of a subframe of the first set that are not used by the eNB base station for signalling. In this way, even more than 60% of the LTE resource grid can be re-used by the 5G system.

The invention will now be explained in more detail below on the basis of preferred exemplary embodiments thereof with reference to the accompanying drawings, in which:
Fig. 1 shows exemplary components of an LTE and a 5G communication system operated according to the method of the invention;
Fig. 2 shows an LTE downlink radio frame structure in the time/frequency-plane; and
Fig. 3 shows a downlink radio frame co-existence scheme for operating the LTE and 5G communication systems of Fig. 1 according to the invention.

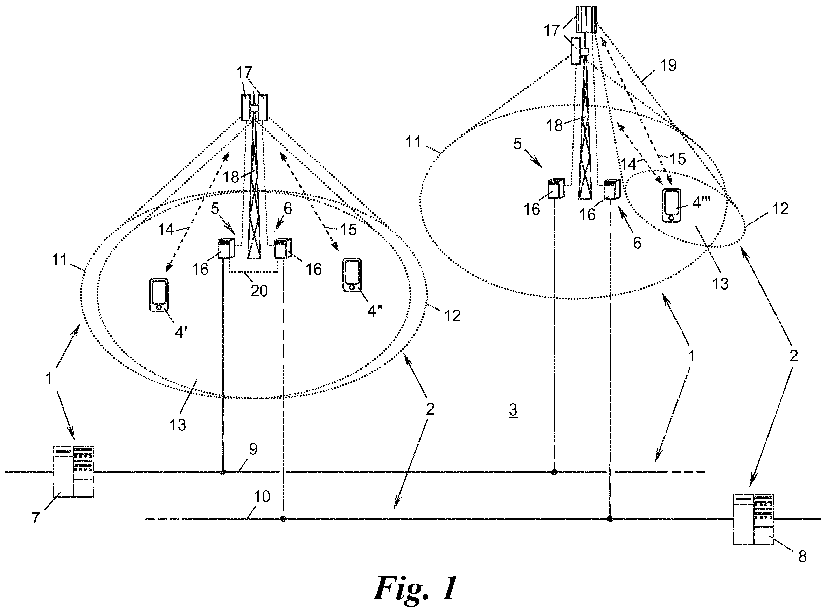

Fig. 1 shows a first communication system 1 and a second communication system 2 operating in the same geographical area 3 to communicate with mobile user terminals ("user entities", UE) 4', 4", 4"'. For each communication system 1, 2 two exemplary base stations 5 and 6, respectively, are shown, connected to core networks 7, 8 of the communication systems 1, 2 via data networks 9, 10. Each base station 5 of the first communication system 1 has a radio coverage area 11, and each base station 6 of the second communication system 2 has a radio coverage area 12.

The first communication system 1 operates according to an LTE (Long Term Evolution) standard ("4G") of the 3GPP consortium, whereas the second communication system 2 operates according to a 5G standard of the 3GPP consortium. The radio part of the 5G standard is defined in, e.g., 3GPP TS 38.211. The base stations 5 of an LTE communication system 1 are also called "eNodeB" base station or "eNB base stations", shortly "eNB", whereas the base stations 6 of a 5G communication system 2 are also called "gNB base stations" or shortly "gNB".

Due to the operation in the common geographical area 3, the radio coverage areas 11, 12 of two co-located or adjacent eNB and gNB base stations 5, 6 may overlap in overlap areas 13. In an overlap area 13, user terminals 4', 4", 4"' may either communicate with an eNB base station 5 or a gNB base station 6 or both. Dedicated LTE user terminals 4' may be able to communicate only with eNB base station 5 (see arrows 14), dedicated 5G user terminals 4" may be able to communicate only with gNB base stations 6 (see arrows 15), and dual LTE/5G user terminals 4"' may be able to communicate with both an eNB and a gNB base stations 5, 6.

Each of the eNB and gNB base stations 5, 6 usually comprises a base station controller 16 and one or more antennas 17 mounted on a pole, mast, tower 18 etc. The antennas 17 of co-located base stations 5, 6 can share the same tower 18. The antennas 17 may be omni-directional or directional. In particular, antennas 17 of gNB base stations 6 can be antenna arrays for multiple directional coverage beams 19, as the "New Radio" (NR) specifications of the 3GPP 5G standard supports multi-beam diversity. The overlapping coverage area 13 can therefore also be the overlap area of the coverage area 12 of one of the beams 19 of an NR gNB base station 6 with the coverage area 12 of an eNB base station 5. The methods disclosed herein are thus also applicable to LTE and 5G cooperations within one of the beams 19 of gNB base stations 6 with NR.

To operate LTE and 5G communication systems 1, 2 in areas 13 of overlapping radio coverage, hitherto different frequency bands had been used by the LTE system 1 on the one hand and the 5G system 2 on the other hand. The cooperation methods disclosed in the following, however, now use the same - or at least overlapping - frequency bands for the LTE and the 5G system, respectively, in the "downlink" (base station to user terminal) and/or the "uplink" (user terminal to base station) direction of the communications 14, 15, for example, when only a limited bandwidth is available for the operation of the systems 1, 2 in the same area 3.

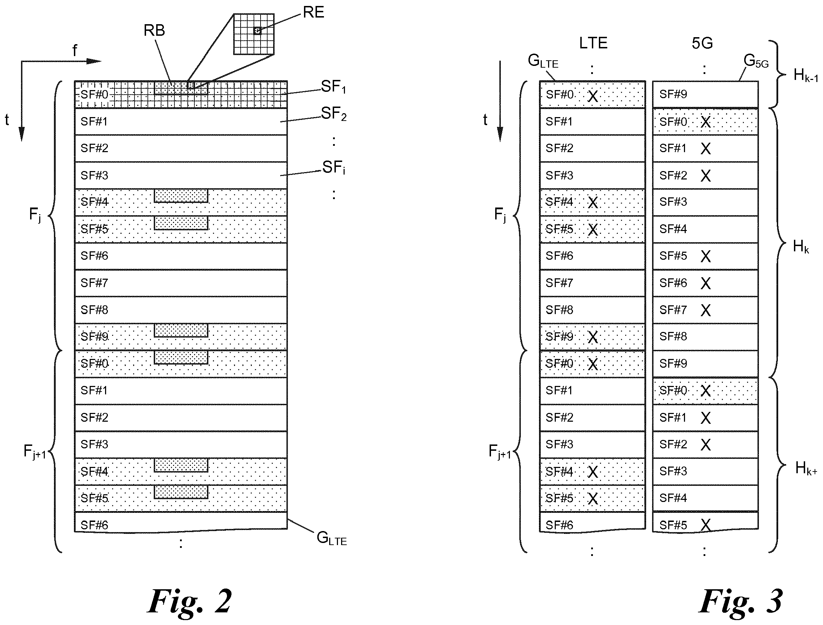

These methods exploit the specific structure of LTE communications 14 which are organised in a sequence of radio frames. Fig. 2 shows the LTE resource grid G_{LTE} of the LTE system 1 and the communications 14 in the time/frequency-plane t/f. The recource grid G_{LTE} consists of a number of resource blocks RB which each comprise a subgrid of resource elements RE. Each resource element RE in turn comprises a number of subcarriers (not shown) in the frequency dimension f and a number of OFDM symbols (not shown) in the time dimension t, representing downlink data to be communicated from an eNB base station 5 to a user terminal 4', 4", 4"'.

The resource blocks RB are grouped in subframes SF₁, SF₂, ..., generally SFᵢ. Several consecutive subframes SFᵢ, e.g., ten subframes SFᵢ designated SF#0, SF#1, ..., SF#9, make up each one of the downlink radio frames F₁, F₂, ..., generally Fⱼ, of a communication 14 in the downlink direction.

According to the LTE standard, at least some resource blocks RB of the first, fifth, sixth and tenth subframes SF#0, SF#4, SF#5 and SF#9 of each downlink radio frame Fⱼ are used for signalling purposes, e.g., to carry LTE common channels such as PBCH (physical broadcast channel), PSS (primary synchronization signal), SSS (secondary synchronization signal), PCH (paging channel), SIB-1 (system information block 1) etc.

The resource grid G_{5G} of the 5G system 2 and the communications 15 is very much the same as the resource grid G_{LTE} of the LTE system 1 shown in Fig. 2, however, in the downlink direction the location of the 5G signalling channels is flexible and not restricted to specific subframes SFᵢ of a 5G radio frame Hₖ (see Fig. 3). Rather, in the 5G system 2 any subframe SFᵢ can be used for downlink signalling, with one exception: The first subframe SF#0 - or the first and the fifth subframes SF#0, SF#4 in case of an SSB-PeriodicityServingCell-parameter of 5 ms - is/are used for 5G signalling in each frame Hₖ (or at least in every other, every fourth, eighth, etc. frame Hₖ when the SSB-PeriodicityServingCell-parameter is set to 20, 40, 80, etc ms).

As can be seen from the LTE downlink frame structure of Fig. 2, there are subframes SFᵢ which are non-essential for LTE signalling purposes such as (here) the subframes SF#1, SF#2, SF#3, SF#6, SF#7 and SF#8. These subframes would usually be allocated by an eNB base station 5 to carry downlink traffic data. As described in the following, these subframes can be allocated by a 5G gNB base station 6 to ensure cooperation in an overlapping coverage area 13.

Fig. 3 shows this in detail. The frames Fⱼ and subframes SFᵢ of the resource Grid G_{LTE} of an eNB base station 5 are shown over time t in the left half of Fig. 3, whereas the frames Hₖ and their subframes SFᵢ of the resource grid G_{5G} of a gNB base station 6 are shown over time t in the right of half Fig. 3. The subframes SFᵢ of the 5G frames Hₖ are comprised of resource blocks RB with resource elements RE as shown in Fig. 2.

Firstly, the resource grids G_{LTE} and G_{5G} of eNB and gNB base stations 5, 6 which share an overlapping coverage area 13 are synchronized on a subframe level, i.e., the starting points in time of the subframes SFᵢ of the frames Fⱼ of the respective eNB base station 5 are synchronized with the starting points in time of the subframes SFᵢ of the frames Hₖ of the respective gNB base station 6 in the area 13. For reasons detailed further down, the resource grid G_{5G} of the gNB base station 6 is, however, offset with respect to the resource grid G_{LTE} of the eNB base station 5 by one (or more) subframe durations so that the first subframes SF₁ (SF#0) of the 5G frames Hₖ coincide with the second, third, fourth, seventh, eight or ninth subframes SF₂, SF₃, SF₄, SF₇, SF₈, SF₉ (SF#1, SF#2, SF#3, SF#6, SF#7, SF#8) of the LTE frames Fⱼ.

The time synchronization of co-located or adjacent eNB and gNB base stations 5, 6 on a subframe level can be achieved by any technical means. For example, one of the eNB and gNB base stations 5, 6 can act as a master clock and the other one be slaved thereto, e.g., via a data connection 20 therebetween. Alternatively, the eNB and gNB base stations 5, 6 can be fed with a common clock signal, for example via a Precision Time Protocol (PTT) such as the standard IEEE 1588. The common clock signal can, e.g., be derived from a GNSS (Global Navigation Satellite System) clock, for example from a GPS timing signal. The common clock signal can, for example, be received in the core networks 7, 8 of the communication systems 1, 2 and transmitted via the data networks 9, 10 to the eNB and gNB base stations 5, 6.

Secondly, one or more of the non-signalling subframes SFᵢ of the LTE frames Fⱼ (here: one or more of the subframes SF#1, SF#2, SF#3, SF#6, SF#7 and SF#8) are used by the gNB base station 6 in the area of overlap 13 with the respective eNB base station 5, and the latter refrains from using this/these subframe/s itself. In this way, 10% to 60% of all subframes SFᵢ of the LTE frames Fⱼ can be used for 5G communications 15 in an area of overlap 13 with downlink resource grids G_{LTE}, G_{5G} overlapping each other within the same frequency range. And by offsetting the resource grid G_{5G} with respect to the resource grid G_{LTE} as described above, it can be ensured that the gNB base station 6 can use its first subframes SF#0 - or its subframes SF#0 and SF#5 - for 5G downlink signalling purposes, as these subframes do not collide with any subframes SFᵢ of the LTE resource grid G_{LTE} which are necessary for LTE downlink signalling purposes.

In the uplink direction, resource allocation between an eNB base station 5 and a gNB base station 6 can be chosen arbitrarily and flexibly as there are no signalling channels fixed to certain subframes SFᵢ of uplink data frames Fⱼ, Hₖ in either LTE or 5G. For increased re-use of resources an eNB base station 5 and a gNB base station 6 can even share coinciding subframes SFᵢ for so-called "random-access" transmissions from user terminals 4', 4", 4"', i.e., for an (uplink) Random Access Channel (RACH), as it does not matter whether only LTE user terminals 4', 4"', or only 5G user terminals 4", or 4"', or both, collide in such a channel.

In the example shown in Fig. 3, the set of subframes SFᵢ used by an eNB base station 5 (marked with an "X" in the grid G_{LTE}) has a size of "4", whereas the set of subframes SFᵢ used by a gNB base station 6 (marked with an "X" in the grid G_{5G}) has a size of "6". Of course, the respective sizes of these sets, i.e., the number of subframes SFᵢ therein, can be chosen arbitrarily, as long as the subframes that are necessary for LTE and 5G signalling purposes, respectively, are available to the respective eNB or gNB base station 5, 6, both in the downlink and the uplink direction.

The sizes of the subframe sets used by the eNB and the gNB base stations, respectively, can be preset as a system parameter according to the expected number of LTE user terminals 4', 4"' on the one hand and 5G user terminals 4", 4"' on the other hand in an area of overlap 13. Alternatively, the sizes of the subframe sets used by the eNB and gNB base stations 5, 6, respectively, can be negotiated dynamically between an eNB base station 5 and a gNB base station 6 sharing the same overlap area 13 in response to a current or estimated data traffic volume of downlink data over the eNB base station 5 on the one hand and the gNB base station 6 on the other hand. In the uplink direction, the same applies mutatis mutandis; the preset or negotiated set sizes can also be different in the uplink and downlink direction. This dynamic negotiation can, e.g., be made over a dedicated data connection 20 between the co-located or adjacent eNB and gNB base stations 5, 6.

Optionally, the subframe/s SFᵢ used by a gNB base station 6 can be indicated in the SysInfo broadcast by the eNB base station 5 sharing the overlap area 13, to prevent LTE user terminals 4', 4"' from looking for reference signals in those subframes. The indication in the SysInfo broadcast can, e.g., be made by designating such subframes SFᵢ as MBSFN (multimedia broadcast over a single frequency network) subframes so that they are ignored by LTE user terminals 4', 4'".

Further optionally, if additional traffic volume capacity is needed in the 5G system 2, a gNB base station 6 could also be allocated some or even all of the resource blocks RB of one or more of the "signalling" subframes SFᵢ of the LTE system 1 (here: of the subframes SF#0, SF#4, SF#5, SF#9) which are not used for actual current signalling in those subframes, such as one or more of the resource blocks RB shown in light grey in Fig. 2 (the resource blocks RB shown in dark grey in Fig. 2 being used for actual signalling in the LTE downlink direction).

The invention is not restricted to the specific embodiments described in detail herein, but encompasses all variants, combinations and modifications thereof that fall within the framework of the appended claims.

## Claims

1. Method for operating a first communication system (1) according to an LTE standard and a second communication system (2) according to a 5G standard in a same radio coverage area (3),
to be used for communication (14, 15) between a user terminal (4', 4"') and an eNB base station (5) of the first communication system (1) and between the same or another user terminal (4', 4"') and a gNB base station (6) of the second communication system (2),
wherein each of the eNB and gNB base stations (5, 6) communicates downlink data over a sequence of downlink radio frames (Fⱼ, Hₖ) and uplink data over a sequence of uplink radio frames (Fⱼ, Hₖ), the downlink as well as the uplink radio frames (Fⱼ, Hₖ) each comprising a predetermined number of subframes (SFᵢ), **characterized by**
synchronizing the eNB and gNB base stations (5, 6) on a subframe level and using, at least for their downlink radio frames (Fⱼ, Hₖ), overlapping frequency bands for the eNB base station (5) and the gNB base station (6),
wherein, at least for the downlink radio frames (Fⱼ, Hₖ), the eNB base station (5) uses a first set of subframes (SFᵢ) for communication (14) and the gNB base station (6) uses a second set of subframes (SFᵢ) for communication (16), which first and second sets of subframes (SFᵢ) do not overlap during communication (14, 15).

2. Method according to claim 1, wherein each frame (Fⱼ, Hₖ) has a set of ten subframes (SFᵢ), **characterized in that**
the eNB base station (5) uses at least the 1st, 5th, 6th and 10th subframe (SFᵢ) in its downlink radio frames (Fⱼ), and
the gNB base station (6) uses at least one of the remaining 2nd, 3rd, 4th, 7th, 8th and 9th eNB base station subframes (SFᵢ) in its downlink radio frames (Hₖ).

3. Method according to claim 2, **characterized in that** the eNB and gNB base stations (5, 6) are synchronized such that the 1st subframes (SF₁) of the downlink radio frames (Hₖ) of the gNB base station (6) coincide with the 2nd, 3rd, 4th, 7th, 8th or 9th subframes (SF₁, SF₂, SF₃, SF₇, SF₈, SF₉) of the downlink radio frames (Fⱼ) of the eNB base station (5).

4. Method according to claim 3, **characterized in that** the eNB and gNB base stations (5, 6) are synchronized such that the 1st subframes (SF₁) of the downlink radio frames (Hₖ) of the gNB base station (6) coincide with the 2nd subframes (SF₂) of the downlink radio frames (Fⱼ) of the eNB base station (5).

5. Method according to any one of the claims 1 to 4, **characterized in that**
the eNB and gNB base stations (5, 6) use overlapping frequency bands for their uplink radio frames (Fⱼ, Hₖ), and **in that**
the eNB and gNB base stations (5, 6) share coinciding subframes (SFᵢ) of their uplink radio frames (Fⱼ, Hₖ) for random-access transmissions received from user terminals (4', 4", 4"').

6. Method according to any one of the claims 1 to 5, **characterized in that** the sizes of the first and second sets are dynamically negotiated between the eNB and gNB base stations (5, 6) in response to a current or estimated data traffic volume over the eNB base station (5) and the gNB base station (6), respectively.

7. Method according to any one of the claims 1 to 6, **characterized in that** the subframe/s (SFᵢ) used by the gNB base station (6) is/are indicated in a SysInfo broadcast by the eNB base station (5).

8. Method according to claim 7, **characterized in that** said subframe/s (SFᵢ) is/are identified in the SysInfo as MBSFN subframes.

9. Method according to any one of the claims 1 to 8, **characterized in that** a common clock signal is fed to the eNB and gNB base stations (5, 6) for synchronizing.

10. Method according to claim 9, **characterized in that** the common clock signal is fed via a precision time protocol.

11. Method according to claim 9 or 10, **characterized in that** the common clock signal is derived from a Global Navigation Satellite System clock.

12. Method according to any one of the claims 1 to 11, **characterized in that** the subframes (SFᵢ) of downlink radio frames (Fⱼ, Hₖ) are split in frequency and time into resource blocks (RB) and the gNB base station (6) uses at least one of those resource blocks (RB) of a subframe (SFᵢ) of the first set that are not used by the eNB base station (5) for signalling.
